# FASCICULE DE BREVET EUROPEEN

(11) **EP 0 495 725 B1**
(45) Date de publication et mention de la délivrance du brevet: **17.04.1996**
(21) Numéro de dépôt: 92400124.1
(22) Date de dépôt: 17.01.1992
(51) Int. Cl.: A23K 1/00, A23K 1/18

(54) **Procédé pour augmenter la population microbienne du rumen des animaux ruminants et pour améliorer les performances zootechniques de ces animaux**
Verfahren zum Steigern der mikrobiellen Bevölkerung im Pansen der Wiederkäuer und zur Verbesserung der zootechnischen Leistung dieser Tiere
Process for increasing the microbial population in the rumen of ruminants and for improving the zootechnical performances of these animals

(30) Priorité: 18.01.1991 FR 9100576
(43) Date de publication de la demande: 22.07.1992
(73) Titulaire: GUYOMARC'H NUTRITION ANIMALE, F-56250 Saint-Nolff (FR)
(72) Inventeur: Nguyen, Tan Hung, F-56890 Saint-Avé (FR); Brongniart, Isabelle Agnès, F-56250 Tréffléan (FR)
(74) Mandataire: Ahner, Francis

(56) Documents cités:
- EP-A- 0 296 051
- EP-A- 0 399 819
- WORLD PATENTS INDEX Section Ch, Week 7714, Derwent Publications Ltd., London, GB; Class B, AN 77-24629Y
- WORLD PATENTS INDEX Section Ch, Week 7714, Derwent Publications Ltd., London, GB; Class B, AN 77-24628Y

## Description

L'invention concerne un procédé pour augmenter la population microbienne du rumen des animaux ruminants, avec pour conséquence l'amélioration des performances zootechniques de ces animaux. L'invention consiste à faire ingérer à ces animaux des spores revivifiables du Bacillus cereus, souche C.I.P.5832 (collection de l'Institut Pasteur).

### L'état de l'art

Le rumen, l'un des quatre estomacs des ruminants, contient un très grand nombre de microorganismes formant un ecosystème vivant en symbiose avec l'animal hôte.

Parmi ces microorganismes, les espèces dominantes sont :
- des bactéries, de l'ordre de 10¹⁰ à 10¹¹ germes par gramme de contenu ruminal,
- des protozoaires, de l'ordre de 10⁵ a 10⁶ germes par gramme de contenu ruminal.

A côté de ces espèces dominantes l'on trouve aussi des champignons microscopiques, des mycoplasmes et des bactériophages.

Ces microorganisms appartiennent à des genera et des espèces très variées : rien que pour les bactéries, l'on a pu décrire 22 genera et 63 espèces (T.M. Yokohama et K.A. Johnson - In the ruminal animal - Digestive Physiology and Nutrition - D.C. Church, Editor, A Reston Book, New Jersey 07632, USA, pp 125-144).

La majorité des microorganismes du rumen sont des anaérobies stricts, rendant leur étude difficile.

Devant Les difficultés, liées à la fois au grand nombre d'espèces microbiennes présentes dans le rumen, et à leur caractère anaérobique, les études des variations quantitatives de la population microbienne du rumen se font la plupart du temps par des marqueurs de la microflore.

Le marqueur le plus couramment utilisé est le DAPA (2-6 diamino-pimelic acid), amino acide qui est spécifique des microorganismes et qu'on ne trouve pas, ni dans les tissus des animaux, ni dans ceux des végétaux. Dans un régime alimentaire donné, les proportions de DAPA du contenu du rumen restent stables et l'utilisation de ce marqueur est particulièrement utile pour mesurer les variations quantitatives de la population microbienne du rumen.

Les études de la population microbienne du rumen peuvent être réalisées directement chez l'animal in-vivo (par ponction de jus du rumen ; fistulation et canulation du rumen, etc ...).

Les microorganismes du rumen sont capables de dégrader et de fermenter les aliments complexes ingérés par les animaux ruminants qui en tirent une partie importante de leurs nutriments. Les corps microbiens des microorganismes du rien représentent aussi un apport alimentaire important pour les animaux ruminants. Une augmentation de la population microbienne du rumen est donc favorable aux performances zootechniques des animaux ruminants.

Des antibiotiques, et particulièrement des antibiotiques ionophores, sont capables de modifier favorablement les fermentations microbiennes du rumen.

Les brevets japonais N° 77-8381 et 77-8382 nous apprennent que le Bacillus cereus, souche T7112, est capable de corriger les symptômes des anomalies de la fermentation du rumen des mammifères ruminants. Ces anomalies, appelées ballonnement et pourrissement du ler estomac, sont caractérisées par une augmentation de l'azote ammoniacal ou de l'acide propionique dans le jus du contenu ruminal. Ces symptômes et les résultats de leur traitement sont illustrés par les tableaux 1 et 2. Dans le cas des bovins atteints de ballonnement (Tableau 1), le taux d'azote ammoniacal, fortement augmenté chez les animaux malades, est ramené au taux normal chez les animaux guéris. Dans le cas des agneaux atteints de ballonnement, le taux d'acide propionique, augmenté chez les animaux malades, est ramené au taux normal chez les animaux guéris. Cependant, le brevet japonais N° 1977-8381 ne nous apprend pas si le Bacillus cereus, souche T7112, a une activité quelconque sur la taille ou la composition de la population microbienne autochtone du rumen.

**TABLEAU 1**

| **BOVINS** | | | | | |
|---|---|---|---|---|---|
| Bovins | | Azote ammoniacal γ/ml | Azote total mg/ml | Acide volatil ml NaOH 0.1 N | Acide lactique γ/ml |
| SAINS | 1 | 62 | 0.74 | 4.35 | 51 |
| | 2 | 84 | 0.76 | 3.25 | 0 |
| | 3 | 67 | 0.84 | 7.44 | 46 |
| | 4 | 120 | 0.71 | 3.13 | 56 |
| ATTEINTS de BALLONNEMENT | 5 | 232 | 0.78 | 4.50 | 0 |
| | 6 | 204 | 0.76 | 3.50 | 10 |
| | 7 | 273 | 1.36 | 6.32 | 50 |
| | 8 | 344 | 0.80 | 6.20 | 16 |
| | 9 | 194 | 0.53 | 1.55 | 8 |
| ATTEINTS DE BALLONNEMENT AYANT RECU LE TRAITEMENT | 8 | 17 | 0.62 | 10.26 | 27 |
| | 9 | 52 | 0.62 | 5.55 | 74 |

**TABLEAU 2**

| **AGNEAUX** | | | | | |
|---|---|---|---|---|---|
| Agneaux | | Acide acétique % | Acide propionique % | Acide butyrique % | Autres acides gras volatils % |
| SAINS | 1 | 57 | 16 | 19 | 8 |
| | 2 | 59 | 17 | 21 | 3 |
| | Moyenne | 58 | 17 | 20 | 7 |
| ATTEINTS DE BALLONNEMENT | 3 | 56 | 22 | 19 | 3 |
| | 4 | 49 | 25 | 23 | 3 |
| | 5 | 56 | 21 | 17 | 6 |
| | Moyenne | 54 | 23 | 20 | 4 |
| GUERIS | 3' | 58 | 18 | 20 | 4 |
| | 4' | 55 | 16 | 18 | 11 |
| | 5' | 56 | 19 | 21 | 4 |
| | Moyenne | 56 | 18 | 20 | 6 |

Le brevet européen N° 0 299 183 du 28.05.88, (priorité : 11.06.87 SE 8702435) nous apprend que l'ingestion de bactéries productrices d'acide lactique (Lactobacillus, Pediococcus, Streptococcus, et Leuconostoc) ou de bactéries productrices d'amylase et de protéase (Bacillus subtilis et Bacillus toyoi) est capable de modifier la composition du lait des femelles laitières. Cette modification est cacactérisée par une augmentation du taux protéique du lait (il est écrit qu'une certaine modeste augmentation du taux de matière grasse du lait a été aussi notée). Cependant, les résultats rapportés dans ce brevet (Tableau 3) montrent clairement que seul le taux protéique du lait a augmenté, la production laitière (kg de lait tel que produit par jour) n'est pas modifiée, la production laitière corrigée au taux (standardisé) de matière grasse a fortement chuté. Cela signifie que le taux de matière grasse a été diminué par le traitement.

**TABLEAU 3**

| | Ferme 1 Traitement | | Ferme 2 Traitement | | Ferme 3 Traitement | |
|---|---|---|---|---|---|---|
| | 1 | 2 | 1 | 2 | 1 | 2 |
| Production de lait (kg/j) | 24.71 | 24.07 | 19.57 | 18.91 | 28.21 | 28.39 |
| Production de lait corrigé pour la matière grasse (kg/j) | 27.90 | 22.93 | 22.74 | 20.53 | 29.43 | 26.65 |
| Protéine (%) | 3.47 | 3.71 | 3.30 | 3.63 | 3.37 | 3.5 |
| Traitement 1 : Témoin sans addition de préparation bactérienne. Traitement 2 : Avec addition de préparation bactérienne | | | | | | |

Le brevet européen N° 0 299 183 ne nous apprend pas si l'effet des bactéries ingérées (augmentation du taux protéique du lait) est dû à une action quelconque de ces bactéries sur la population microbienne autochtone du rumen. EP-A-0 399 819 décrit pour sa part des aliments pour animaux comprenant des spores revivifiables de souches bactériennes, alors que EP-A-0 296 051 décrit B. cereus C.I.P. 5832 pour promouvoir la croissance des animaux.

### L'invention

Nous avons découvert Que l'ingestion de très faibles quantités de spores revivifiables de Bacillus cereus, souche C.I.P.5832 (C.I.P. = Collection de l'Institut Pasteur), est capable d'augmenter le taux de DAPA dans le rumen et d'augmenter les performances zootechniques des animaux ruminants c'est à dire production de lait ou de viande.

Les faibles quantités de spores de Bacillus cereus à apporter aux animaux, souche C.I.P.5832, peuvent être calculées par l'homme de l'art afin que ces spores soient présentes dans le jus du rumen en nombres allant de 10 000 à 100 000 spores par millilitre de jus de rumen. Ces nombres sont infiniment plus petits que ceux décrits précédemment pour la population microbienne du rumen.

Les exemples non limitatifs suivants illustrent l'invention.

### EXEMPLE 1

### Expérience sur vaches fistulées

4 vaches fistulées, de race croisée Frisonne x Holstein, portant une canule permanente donnant accès au rumen, ont été utilisées.

Les animaux sont nourris avec une ration guotidienne de 9 kg de matière sèche d'un mélange constitué de 30 % d'ensilage de maïs et de 70 % d'aliment concentré.

La ration est distribuée individuellement à chaque animal, le matin à 10 heures. La quantité distribuée est consommée dans la journée.

Les caractéristiques nutritionnelles de l'ensilage de maïs et de l'aliment concentré sont les suivantes :

**TABLEAU 4**

| | Ensilage de maïs | Aliment Concentré |
|---|---|---|
| Matière sèche (g/kg) | 330 | 870 |
| Cellulose brute (g/kg) | 231 | 109 |
| Amidon + sucres (g/kg) | 149 | 214 |
| Protéine brute (g/kg) | 82 | 180 |
| U.F.L. / kg | 0.9 | 0.9 |

Chaque jour, pendant 4 jours avant l'expérience, on prélève le jus du rumen de chaque vache à travers la canule. Cette période préexpérimentale sert de témoin.

Pendant l'expérience, on ajoute à l'aliment concentré, 0.1 % d'une poudre sèche contenant 10⁹ spores revivifiables de Bacillus cereus, souche C.I.P.5832, par gramme. L'expérience dure 9 jours. Pendant les deux derniers jours de l'expérience, du jus de rumen est prélevé individuellement sur chaque vache.

Quelle que soit la période, le jus de rumen est prélevé vers 8 heures du matin, avant la distribution de la ration alimentaire.

Le jus de rumen prélevé est filtré avec de la gaze pour enlever les particules alimentaires.

Chaque jus de rumen filtré est soumis aux analyses suivantes :
- Dénombrement de Bacillus cereus, souche C.I.P.5832, selon la méthode de J. Michard et A. Levesque, 1989.
- pH avec un pHmètre électronique (marque Schott).
- Acides gras volatils totaux, acide acétique, acide propionique, acide butyrique par chromatographie gazeuse (chromatographe de marque Girdel).
- Ammoniaque : par la méthode de Kjeldahl après précipitation des protéines avec de l'acide trichloracétique.
- DAPA : par la méthode de J.W. Czerkawski, 1974.

Les résultats ont été les suivants :

**TABLEAU 5**

| **Expérience sur vaches fistulées** | | | |
|---|---|---|---|
| | Période Témoin | Période Expérimentale | Signification statistique (Analyse de variance) |
| B. CEREUS, C.I.P.5832 C.F.U./ml) | - | 45 000 ± 1 540 | |
| pH | 6.84 ± 0.13 | 6.90 ± 0.10 | N.S.^{(*)} |
| Acides gras volatils totaux (mmoles/l) | 77.18 ± 11.36 | 79.80 ± 12.10 | N.S. |
| Acide acétique (mmoles/l) | 53.50 ± 6.67 | 54.15 ± 7.47 | N.S. |
| Acide propionique (mmoles/l) | 10.47 ± 2.95 | 10.12 ± 2.19 | N.S. |
| Acide butyrique (mmoles/l) | 10.87 ± 1.93 | 11.31 ± 2.84 | N.S. |
| Ammoniaque (mg/l) | 57 ± 27 | 83 ± 15 | S. |
| DAPA (mg/l) | 855 ± 85 | 1 290 ± 90 | S. |

| | | | |
|---|---|---|---|
| (*) N.S. = Non Significatif p ≧ 0.05 S. = Significatif p ≦ 0.05 | | | |

Pendant la période expérimentale, les spores de Bacillus cereus, souche C.I.P. 5832, n'ont pas modifié le pH, les acides gras volatils totaux et les acides acétique, propionique et butyrique du rumen. Par contre, le traitement a augmenté l'ammoniaque et le DAPA.

Ces résultats sont donc différents de ceux du brevet japonais N° 1977-8381.

L'augmentation du taux de DAPA de 50 % (1290 vs. 855 mg/l) ne peut pas provenir de l'apport très faible de spores de Bacillus cereus, souche C.I.P. 5832. En effet, le nombre de spores mesuré est de 45 000 par ml de jus de rumen, nombre infiniment petit par rapport aux nombres décrits précédemment pour la population microbienne autochtone du rumen. Cette augmentation du taux de DAPA signifie une augmentation de la population microbienne autochtone du rumen.

### EXEMPLE 2

### Expérience sur vaches laitières

20 vaches laitières de race croisée Frisonne x Holstein ont été divisées en deux lots homogènes.

L'alimentation est composée de la ration de base complémentée avec un aliment concentré.

La ration de base composée de : ray-grass, ensilage de maïs, blé, paille et urée, apporte quotidiennement à chaque vache 17 kg de matière sèche, 15.31 UFL (Unités Fourragères Lait), 1 435 g de "PDIN" et 1 428 g de "PDIE" (unités de protéines digestibles dans l'intestin du système français de l'alimentation des ruminants). Cette ration de base distribuée par une mélangeuse peseuse couvre une production de base de 25 kg ce fait par jour.

L'aliment concentré apporte par kg de matière sèche : 1 UFL, 142 g PDIN, 138 g PDIE, 80 g cellulose brute, 320 g d'amidon+sucres. L'aliment concentré est distribué individuellement à chaque vache par un distributeur automatique à raison de 1 kg d'aliment par tranche de 2.5 kg de lait au dessus de la production de base (25 kg).

Un lot de dix vaches reçoit la ration quotidienne décrite précédemment. Ce lot sert de témoin.

Le deuxième lot reçoit en plus de la ration précédente 10 g/vache/jour d'une poudre sèche titrant 10⁹ spores revivifiables de Bacillus cereus, souche C.I.P.5832, par gramme de poudre. Cette supplémentation permet d'obtenir en moyenne 60 000 à 80 000 spores revivifiables par ml de jus de rumen.

Les vaches sont traites deux fois par jour. Les quantités de lait produites par chaque vache sont pesées automatiquement à chaque traite. Le taux butyreux et le taux protéique du lait ont aussi été contrôlés.

L'expérience a duré trois semaines.

Les résultats obtenus sont les suivants :

**TABLEAU 6**

| | Lot Témoin | Lot Bacillus | Signification Statistique (Analyse de variance) |
|---|---|---|---|
| Production laitière (kg/jour) | 34.61 | 37.62 | S·^{(*)} |
| Taux butyreux (%) | 3.86 | 3.83 | N.S. |
| Taux protéique (%) | 2.87 | 2.85 | N.S. |

| | | | |
|---|---|---|---|
| (*) N.S. = Significatif, p ≧ 0.05 S. = Significatif, p ≦ 0.05 | | | |

Ces résultats montrent que les spores de Bacillus cereus, souche C.I.P.5832, augmentent la production de lait sans en modifier la composition. Les effets du Bacillus cereus, souche C.I.P.5832, sont donc différents de ceux du brevet européen N° 299 183 obtenus avec les microorganismes Lactobacillus, Pedicoccus, Streptococcus, Leuconostoc, Bacillus subtilis et Bacillus toyoi.

### EXEMPLE 3

### Expérience sur taurillons, producteurs de viandes

28 taurillons de race Salers ont été divisés en deux lots homogènes.

L'alimentation individuelle quotidienne est composée de :
. l'ensilage de maïs avec pesée des quantités consommées,
. 5 kg d'un aliment concentré apportant par kg :
   matière sèche 870 g, protéine brute 167 g, cellulose brute 109 g, amidon 120 g, calcium 6.1 g, phosphore 5.9 g.

Un lot de 14 taurillons consomme la ration précédente et sert de témoin.

Le deuxième lot, formé des 14 autres taurillons, consomme la même ration mais dont l'aliment concentré est supplémenté avec des spores de Bacillus cereus, souche C.I.P.5832, à raison de 400 000 spores revivifiables par gramme d'aliment. Cette supplémentation a été calculée pour apporter environ 30 000 spores revivifiables par ml de jus de rumen.

Les animaux sont identifiés avec une boucle numérotée à l'oreille. Ils sont pesés individuellement au départ et à la fin de l'expérience.

Après 63 jours d'expérience, les résultats ont été les suivants :

**TABLEAU 7**

| **Expérience sur taurillons** | | | |
|---|---|---|---|
| | Lot Témoin | Lot Bacillus | Signification Statistique (Analyse de variance) |
| . **Poids vif (kg)** | | | |
| - Initial | 312.9 | 312.2 | N.S.^{(*)} |
| - Final | 397.3 | 402.7 | S. |
| . **Gain de poids total (kg)** | 84.4 | 90.5 (+7.2%) | S. |
| **. Gain de poids moyen quotidien (g)** | 1 339 | 1 436 (+7.2%) | S. |

| . **Consommation de matière sèche (kg/jour)** | | | |
|---|---|---|---|
| - ensilage de maïs | 4.32 | 3.59 | N.S. |
| - concentré | 4.35 | 4.35 | N.S. |
| - totale | 8.67 | 7.94 | N.S. |
| . **Indice de consommation** | 6.42 | 5.93 (-7.6%) | S. |

| | | | |
|---|---|---|---|
| (*) N.S. = Non Significatif p ≧ 0.05 S. = Significatif p ≦ 0.05 | | | |

Ces résultats montrent donc que les spores revivifiables de Bacillus cereus, souche C.I.P.5832, sont capables d'améliorer les performances zootechniques des taurillons producteurs de viande : gain de poids et indice de consommation (indice de consommation = kg de matière sèche consommée par kg de gain de poids).

## Revendications

1. Procédé non thérapeutique pour augmenter la population microbienne du rumen des animaux ruminants, et pour augmenter leurs performances zootechniques c'est à dire production de lait et de viande, caractérisé en ce qu'on fait ingérer à ces animaux des bactéries de type Bacillus cereus souche C.I.P.5832 (Collection de l'Institut Pasteur).

2. Procédé selon la revendication 1, caractérisé en ce que les bactéries se présentent en partie ou totalement sous la forme de spores revivifiables.

3. Procédé selon la revendication 2, caractérisé en ce que l'on fait ingérer entre 10 000 à 100 000 spores par millilitre de jus de rumen.

4. Procédé selon l'une quelconque des revendications 1 à 3, caractérisé en ce que les bactéries sont ingérées sous la forme d'un aliment supplémenté.

5. Procédé pour augmenter la production de lait des animaux ruminants sans en modifier la composition, caractérisé en ce que l'on augmente la population microbienne de leur rumen selon le procédé décrit dans l'une quelconque des revendications 1 à 4.

## Claims

1. Non-therapeutic process for increasing the microbial population of the rumen of ruminant animals, and for increasing their zootechnical performance, that is to say milk and meat production, characterized in that these animals are made to ingest bacteria of the Bacillus cereus, strain C.I.P.5832 (Collection de l'Institut Pasteur), type.

2. Process according to Claim 1, characterized in that the bacteria are partially or totally in the form of spores which can be revivified.

3. Process according to Claim 2, characterized in that between 10 000 and 100 000 spores are caused to be ingested per millilitre of rumen juice.

4. Process according to any one of Claims 1 to 3, characterized in that the bacteria are ingested in the form of a supplemented feed.

5. Process for increasing the milk production of ruminant animals without modifying the composition thereof, characterized in that the microbial population of their rumen is increased according to the process described in any one of Claims 1 to 4.

## Patentansprüche

1. Nicht-therapeutisches Verfahren zur Erhöhung der Mikroben-Population im Pansen von Wiederkäuern und zur Erhöhung ihres Leistungsvermögens in der Tierzucht, d.h. zur Erhöhung der Milch- und Fleischproduktion, dadurch gekennzeichnet, daß man diesen Tieren Bakterien vom Typ Bacillus cereus, Stamm C.I.P. 5832 (Sammelstelle des Institut Pasteur), zuführt.

2. Verfahren nach 1, dadurch gekennzeichnet, daß die Bakterien teilweise oder vollständig in Form von wiederbelebbaren Sporen vorliegen.

3. Verfahren nach Anspruch 2, dadurch gekennzeichnet, daß man 10 000 bis 100 000 Sporen pro ml Pansen-Saft zuführt.

4. Verfahren nach einem der Ansprüche 1 bis 3, dadurch gekennzeichnet, daß die Bakterien in Form eines Futterzusatzes zugeführt werden.

5. Verfahren zur Erhöhung der Produktion von Milch bei Wiederkäuern, ohne ihre Zusammensetzung zu ändern, dadurch gekennzeichnet, daß man die Mikroben-Population ihres Pansens nach dem in einem der Ansprüche 1 bis 4 beschriebenen Verfahren erhöht.
